Europäisches Patentamt

European Patent Office

Office européen des brevets

(11) Numéro de publication: **0 215 703**
**B1**

(12) **FASCICULE DE BREVET EUROPEEN**

(45) Date de publication du fascicule du brevet:
06.12.89

(51) Int. Cl.⁴: **G01V 1/38**, G01V 1/30

(21) Numéro de dépôt: 86401876.7

(22) Date de dépôt: 26.08.86

(54) Système de mesure du coefficient de réflexion acoustique de réflecteurs immergés.

(30) Priorité: 29.08.85 FR 8512990

(43) Date de publication de la demande:
25.03.87 Bulletin 87/13

(45) Mention de la délivrance du brevet:
06.12.89 Bulletin 89/49

(84) Etats contractants désignés:
DE GB NL

(56) Documents cités:
EP-A- 0 049 644
FR-A- 2 145 552
US-A- 3 286 225
US-A- 4 234 938

JOURNAL OF THE ACOUSTICAL SOCIETY OF
AMERICA,
vol. 64, no. 3, septembre 1978, pages 795-801, Acoustical Society of America, New York, US; S.D. MILLIGAN et al.: "Statistical grouping of acoustic reflection profiles"

(73) Titulaire: INSTITUT FRANCAIS DU PETROLE, 4, Avenue de Bois-Préau, F-92502 Rueil-Malmaison(FR)

(72) Inventeur: Bourgeois, Aline, 37, rue des Plantes, F-75014 Paris(FR)
Inventeur: Dubois, Jean-Claude, 9, allée du Chant de l'Alouette Le Fief, F-17200 Royan(FR)

(74) Mandataire: Kermarrec, Michelle et al, Institut Français du Pétrole 4, avenue de Bois-Préau, F-92502 Rueil-Malmaison(FR)

## Description

L'invention a pour objet un système de mesure du coefficient de réflexion de réflecteurs sous-marins, utilisable en particulier pour la mesure du coefficient de réflexion du fond de l'eau.

Parallèlement aux méthodes de prospection sismique à forte pénétration adaptées pour obtenir une représentation du sous-sol jusqu'à de grandes profondeurs, se développent des méthodes d'étude des couches souterraines superficielles.

L'une d'elles qui consiste à mesurer le coefficient de réflexion de la surface du fond, permet de déterminer la nature lithologique des formations sous-jacentes, ce qui est très important pour de nombreuses applications telles que la pose de câbles, de tuyaux, la pose ou l'ancrage d'ouvrages pétroliers, en particulier de plateformes de forage, ou bien encore d'aménagements portuaires, etc.

On connait un dispositif permettant de déterminer le coefficient de réflexion du fond marin par comparaison entre l'amplitude d'impulsions acoustiques émises par un sonar et celle des échos sur le fond de ces impulsions.

La relation mathématique donnant l'affaiblissement des signaux acoustiques par la surface du fond, qui dépend des amplitudes respectives des impulsions émises et reçues, de paramètres propres aux circuits du sonar et de l'affaiblissement dû à la propagation, est traduite sous la forme d'un ensemble de circuits câblés incluant des amplificateurs logarithmiques. Un tel dispositif est décrit dans le brevet français 2.009.222.

Le recours à des circuits spécialisés, organisés suivant une structure figée, présente des inconvénients en ce qu'ils se prêtent mal à des modifications dans les processus d'acquisition et de traitement des signaux.

Il est souhaitable en effet, de pouvoir modifier la position des fenêtres de réception des impulsions acoustiques et leur durée, de changer les lois de gain d'amplification des signaux reçus et les paramètres caractéristiques des signaux que l'on prend en compte pour déterminer le coefficient de réflexion du fond, ou bien encore de traiter les signaux reçus en temps réel, de manière que les opérateurs puissent déterminer sur le champ toutes sortes de données sur la nature du fond et éventuellement, modifier les conditions opératoires pour tenir compte de leurs variations.

Le système selon l'invention permet de déterminer le coefficient de réflexion des ondes acoustiques de réflecteurs immergés émises par une source d'impulsions acoustiques remorquée en immersion par un bateau et reçues par un dispositif de réception.

Ce dispositif comporte un récepteur proche de la source pour déterminer les instants de déclenchement successifs de celle-ci et des moyens de réception remorqués également par le bateau, avec un certain déport longitudinal par rapport à la source. Le bateau comporte un écho-sondeur et la source est associée à un ensemble de commande.

Il est caractérisé en ce qu'il comporte un calculateur numérique programmé, des moyens d'enregistrement, une carte d'interface comportant des circuits pour assurer les communications entre le calculateur et le récepteur proche de la source, les moyens d'enregistrement et l'ensemble de commande de la source, et en ce qu'il comporte des moyens d'atténuation variable des signaux reçus par les moyens de réception, des moyens d'amplification, un ensemble d'acquisition piloté par le calculateur et comportant des moyens de filtrage à caractéristiques ajustables associé à un convertisseur analogique- numérique, des moyens pilotés par le calculateur pour commander les moyens d'atténuation et les moyens de filtrage, et des moyens pour établir un dialogue interactif entre un opérateur et le calculateur.

Le système selon l'invention est particulièrement bien adapté, de par sa structure, à la détermination du coefficient de réflexion de surfaces immergées dans des conditions opératoires très variées qui peuvent être imposées en cours de fonctionnement.

L'utilisation de moyens d'atténuation et de filtrage dont les paramètres de fonctionnement peuvent être modifiés et d'un calculateur programmé adapté à piloter les moyens d'atténuation et de filtrage et par conséquent modifier les signaux reçus durant leur phase d'acquisition et ensuite à effectuer à volonté après leur acquisition, différents traitements pour l'amélioration de la qualité des résultats obtenus, et ceci sous le contrôle permanent d'un opérateur, rend le fonctionnement du système de mesure selon l'invention particulièrement souple.

D'autres caractéristiques et avantages du système apparaîtront à la lecture de la description d'un mode préféré de réalisation, donné à titre d'exemple non limitatif, et en se référant aux dessins annexés sur lesquels :

- la figure 1 représente schématiquement la disposition relative de la source, des moyens de réception et du bateau qui les remorque,
- la figure 2 représente différents trajets suivis par les ondes acoustiques entre la source et les moyens de réception,
- la figure 3 représente schématiquement une trace d'enregistrement des signaux reçus par les moyens de réception,
- la figure 4 représente la position à chaque cycle des "fenêtres" de détection des arrivées directes, des arrivées réfléchies et d'une "fenêtre" de mesure du bruit de fond,

2

- la figure 5 représente le synoptique d'un mode préféré de réalisation du système de mesure selon l'invention,

- la figure 6 représente le synoptique du circuit de commande des moyens d'atténuation et des moyens de filtrage, et

- la figure 7, représente les chronologies d'étapes de fonctionnement du système au cours de chaque cycle d'émission-réception.

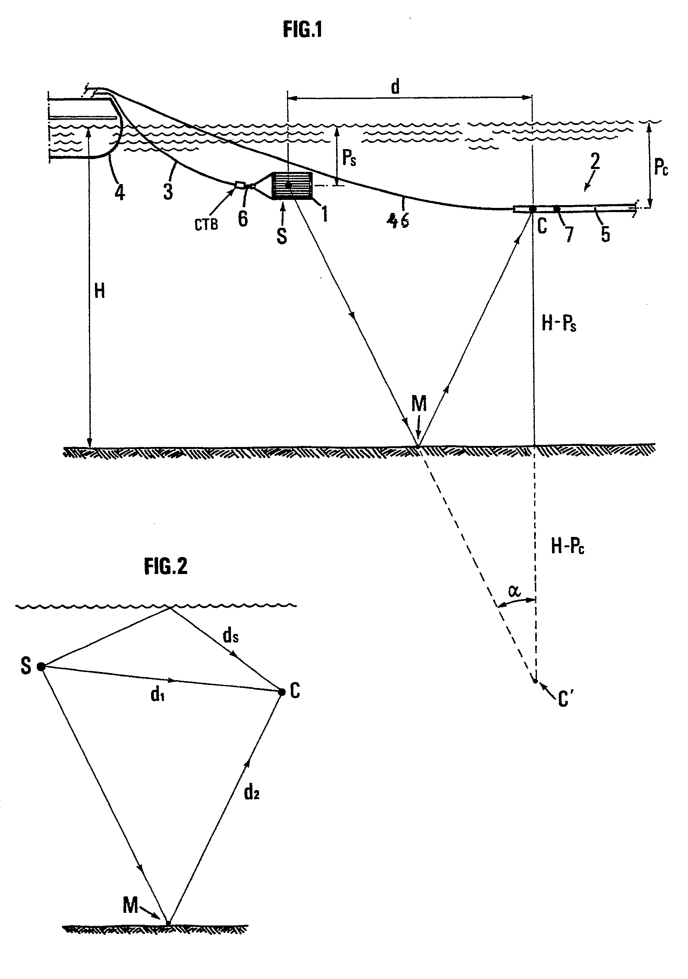

Les opérations de mesure du coefficient de réflexion de réflecteurs immergés tels que la surface du fond d'une masse d'eau, comporte l'utilisation d'une source d'émission d'impulsions acoustiques 1 (Fig. 1) et de moyens de réception 2 des ondes acoustiques.

On utilise de préférence une source d'émission dont les dimensions relativement aux longeurs d'onde des ondes acoustiques émises, peuvent être considérées comme ponctuelles, par exemple un étinceleur tel que celui décrit dans la demande de brevet français publiée 2.574.559. Cet étinceleur comporte une cage cylindrique comprenant une pluralité de tubes pourvus chacun de nombreux orifices de sortie pour des électrodes qui sont reliées par un câble de traction et d'alimentation commun 3, à un générateur à haute tension électrique (non représenté) disposé par exemple sur un navire 4.

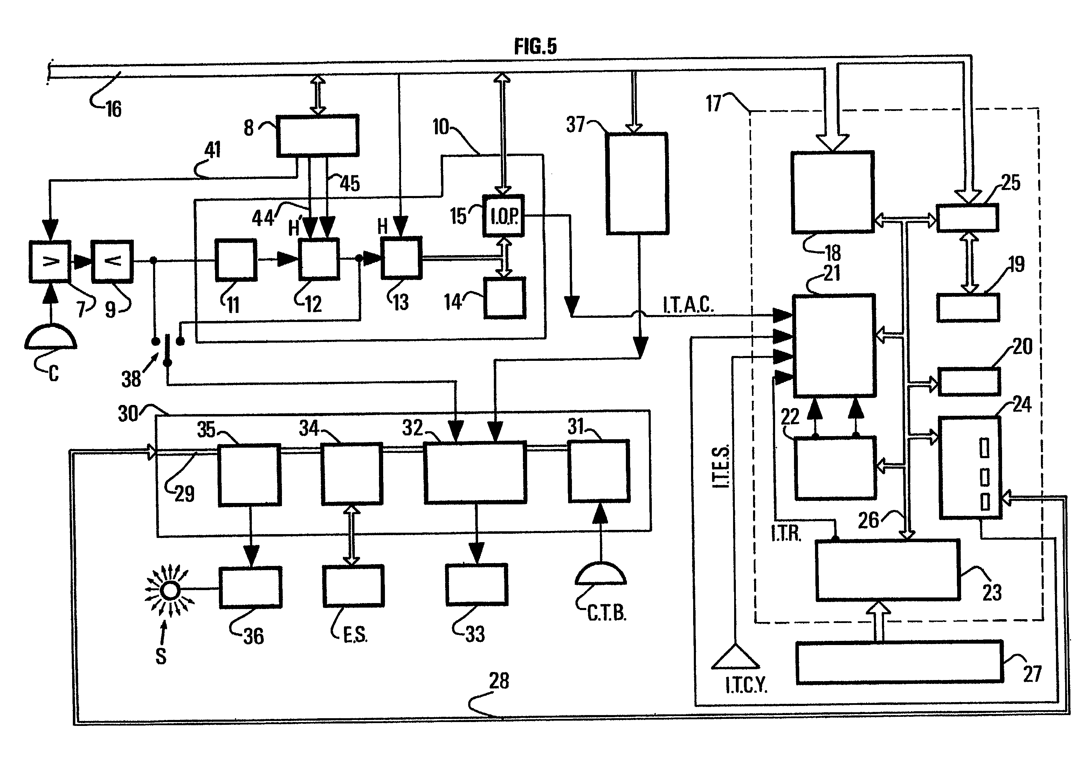

Un récepteur d'ondes acoustiques CTB est disposé au voisinage immédiat de la source 1 pour la mesure de sa profondeur d'immersion $p_s$ et la détection de ses instants successifs de déclenchement qui est traduite par un signal TB. Le câble de liaison 3 comporte une ligne pour la connexion du récepteur CTB à un appareillage électronique disposé sur le navire, qui sera décrit ci-après en relation avec la figure 5.

Les ondes acoustiques sont captées au moyen d'un récepteur C disposé par exemple dans la section de tête d'un ensemble de réception allongé 5 remorqué également par le navire 4. Le récepteur C est constitué d'un hydrophone ou de plusieurs hydrophones interconnectés. Le câble de remorquage 46 de l'ensemble de réception 5 comporte des lignes pour la transmission à l'appareillage de bord (représenté à la Fig. 5) des signaux captés par les moyens de réception.

Chaque cycle de mesure du coefficient de réflexion d'un réflecteur tel que la surface du fond comporte le déclenchement de la source 1, la détection du signal représentatif de son instant d'émission TB par le capteur CTB associé à la source, la réception des ondes acoustiques qui en proviennent directement et celle des échos sur différents réflecteurs, et une étape d'enregistrement et de traitement où l'appareillage de bord détermine en temps réel le coefficient de réflexion d'un réflecteur tel que la surface du fond, à partir des différents signaux qui lui sont transmis en réponse aux signaux acoustiques captés.

Les signaux acoustiques transmis à l'appareillage de bord sont le signal TB indicatif de chaque instant d'émission, qui marque l'instant initial de chaque cycle et les signaux successifs captés par le récepteur C. Le premier (trajet $d_1$) correspond à la propagation directe entre la source S et le capteur C (Fig. 2), le second (trajet $d_s$) à une réflexion sur l'interface eau/air, le troisième (trajet $d_2$) à un première réflexion sur la surface du fond. D'autres signaux suivent, provenant de réflexions simples sur des réflecteurs souterrains ou de réflexions multiples impliquant l'interface eau/air et les différents réflecteurs.

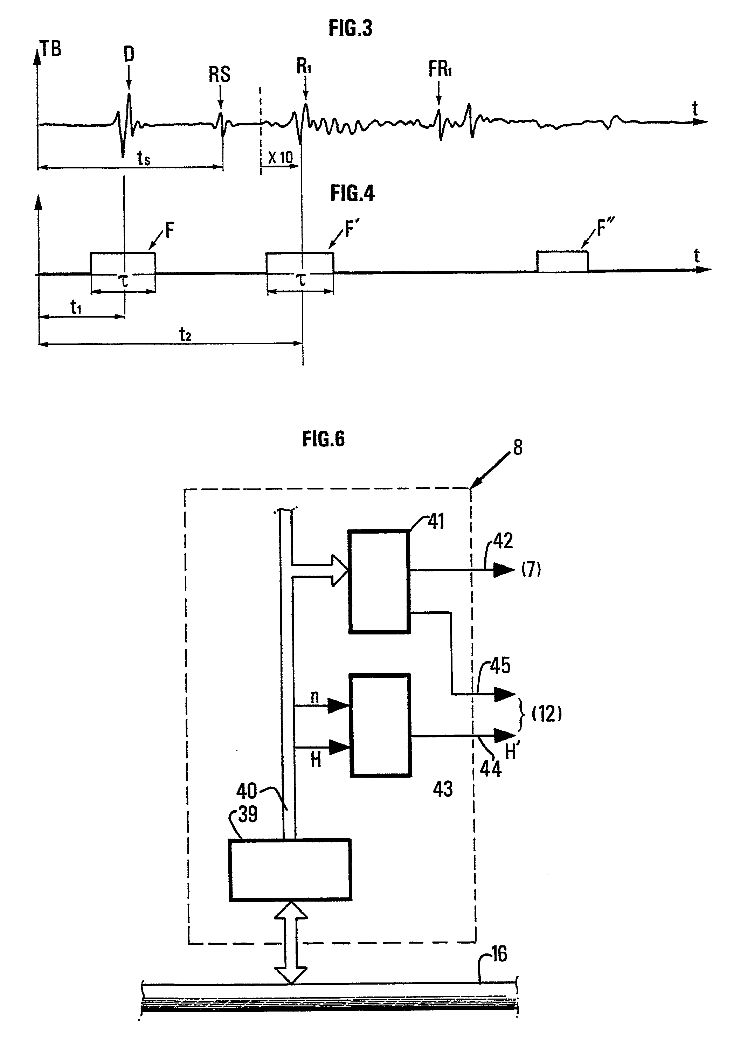

Sur la trace d'enregistrement représentée à la figure 3, les arrivées correspondant aux trajets $d_1$, $d_s$, $d_2$ donnent lieu à des signaux $D_1$ $R_S$ et $R_1$ reçus successivement aux instants $t_1$, $t_s$ et $t_2$.

Le signal $FR_1$ correspond à une double réflexion sur l'interface eau/air et la surface de fond. Pour la clarté du dessin, les signaux reçus postérieurement au signal RS sont amplifiés avec un gain de 10. La valeur du coefficient de réflexion de l'interface eau/air étant peu différente de -1, l'onde parasite de surface est déphasée par rapport à l'onde directe D, ce qui la rend très reconnaissable.

La mesure du coefficient de réflexion comporte la mesure des amplitudes de l'impulsion acoustique directe D, de la première impulsion réfléchie $R_1$ et de leurs intervalles de temps de propagation, de manière à tenir comporte de l'affaiblissement dû à la propagation. Le coefficient de réflexion K s'exprime par la relation :

$$K = \frac{a_2 \, t_2}{a_1 \, t_1} \qquad\qquad (1)$$

où $a_1$ et $a_2$ représentent respectivement les valeurs de paramètres caractéristiques de l'onde directe et de l'onde réfléchie et $t_1$ et $t_2$ représentent les intervalles de temps respectifs de propagation.

Les paramètres caractéristiques $a_2$ et $a_1$ sont par exemple l'amplitude du plus grand pic de chaque signal, qu'il soit positif ou négatif ou bien l'amplitude pic-à-pic qui s'obtient en faisant la somme des amplitudes du pic positif et du pic négatif les plus importants.

On peut également choisir comme paramètre caractéristique de chaque signal reçu, son énergie mesurée sur un certain intervalle de temps.

Les mesures d'amplitude ou d'énergie sont effectuées par exemple en prélevant sur chacun des signaux reçus, une pluralité d'échantillons répartis à intervalles réguliers à l'intérieur d'une fenêtre de mesure F, F' (Fig. 4) de "largeur" constante.

Dans la pratique, la durée des fenêtres est de l'ordre de quelques millisecondes et la fréquence d'échantillonnage de l'ordre de quelques dizaines de kilohertz.

Les mesures de l'amplitude maximale des pics comportent la sélection des échantillons de plus grande amplitude. L'énergie des signaux est mesurée par exemple en faisant la somme des carrés des amplitudes des n échantillons prélevés durant une fenêtre de durée constante ou bien encore la somme des valeurs absolues de ces mêmes échantillons.

Dans le premier cas, si $x_i$ et $x_j$ sont les échantillons prélevés sur le signal direct D et le signal réfléchi $R_1$, le coefficient de réflexion K s'exprime par la relation :

$$K = \frac{t_1}{t_0} \sqrt{\frac{\sum\limits_{j=1}^{n} x_j^2}{\sum\limits_{i=1}^{n} x_i^2}} \qquad (2)$$

Dans le second cas, le coefficient K s'exprime par la relation :

$$K = \frac{t_1}{t_0} \frac{\sum\limits_{j=1}^{n} |x_j|}{\sum\limits_{i=1}^{n} |x_i|} \qquad (3)$$

Pour isoler les signaux acoustiques D et $R_1$ (Fig. 3) de l'ensemble des signaux reçus à la suite de chaque émission, il importe de positionner par rapport à ces signaux les fenêtres d'échantillonnage, respectivement F et F', et par conséquent de connaître la géométrie de l'ensemble d'émission-réception et sa position dans l'eau.

On détermine la durée de propagation du premier signal réfléchi $R_1$ par triangulation à partir des valeurs de la hauteur d'eau, des profondeurs d'immersion de la source 1 et du récepteur C et du déport longitudinal entre ces derniers.

La hauteur d'eau est mesurée par un écho-sondeur auxiliaire, celui du navire remorqueur par exemple. L'écho-sondeur effectue en général une pluralité de mesures durant chaque cycle de mesure du coefficient de réflexion. La valeur de la profondeur qui est exploitée pour la triangulation est une moyenne des différentes mesures effectuées.

Deux profondimètres 6, 7 (fig. 1) disposés l'un au voisinage de la source 1, l'autre dans la section de tête de l'ensemble de réception allongé ou flûte 5, mesurent leurs profondeurs d'immersion respectives $p_s$ et $p_c$.

La distance d entre la source et le récepteur C est déterminée au moment de la mise à l'eau du dispositif d'émission-réception, à partir des longueurs respectives des câbles de remorquage de la source et de la flûte. Elle est déterminée pendant les opérations par la mesure de l'intervalle de temps de propagation direct $t_1$ entre la source et le récepteur. La valeur mesurée au cours d'un cycle est utilisée pour positionner la fenêtre de lecture de l'arrivée directe du cycle suivant.

La durée $t_2$ de propagation du signal $R_1$ (Fig.3) sur le trajet aller et retour SMC entre la source et le récepteur s'exprime par la relation :

$$t_3 = \frac{\overline{SMC}}{V} \frac{2H - P_s - P_c}{V \cos \alpha} \qquad (3)$$

où $(2H - P_s - P_c)$ représente la mesure de la distance entre le récepteur C et son image par rapport à la surface du fond, l'inclinaison du rayon SM par rapport à la verticale et V la vitesse de propagation du son dans l'eau.

4

Le calcul de la durée $t_2$ par voie géométrique est effectuée principalement durant une phase d'initialisation précédant les cycles d'émission-réception, pour positionner la fenêtre F' de réception du signal réfléchi au début des opérations de mesure du coefficient de réflexion. Ensuite, bien que le calcul soit effectué à chaque cycle, le résultat n'intervient plus que pour limiter des écarts éventuels.

Il se peut, en effet, que les résultats de mesure des intervalles de temps de propagation obtenus par un "suivi" de fenêtre s'écartent par trop de ceux déduits de mesures des profondeurs effectuées par le sondeur du bateau, du fait que les signaux les plus forts qui sont sélectionnés par le système de réception ne sont pas réfléchis par la surface du fond mais par un réflecteur affleurant à faible pendage dont le coefficient de réflexion est plus élevé.

Le positionnement des fenêtres au cours de chaque cycle est effectué d'après celui du cycle précédent de la manière suivante :
- on mesure avant le début de chaque nouveau cycle, en l'absence de signal utile, la valeur maximale de l'amplitude du bruit capté par le récepteur C dans une fenêtre de réception supplémentaire F" (Fig. 1) ou bien encore l'amplitude de moyenne de n échantillons de bruit successivement prélevés dans la même fenêtre, de manière à fixer un seuil d'acquisition,
- on ouvre pour chacun des signaux D et $R_1$ à capter, une fenêtre de réception F, F' de largeur ou durée $\tau$ constante (Fig. 4) ayant même position que la fenêtre correspondante du cycle précédent, c'est-à-dire centrée par exemple sur l'instant de détection du pic le plus grand. On commence alors à échantillonner le signal reçu et, à partir du premier échantillon $E_i$ mesuré dont l'amplitude dépasse le seuil d'acquisition, on détermine si, parmi un certain nombre n d'échantillons consécutifs, on en trouve un nombre minimal $N_c$ prédéterminé dont l'amplitude dépasse la valeur-seuil. Le nombre $N_c$ est déterminé d'après des enregistrements effectués antérieurement le long du même profil ou à partir de mesures faites durant la phase d'initialisation.

Si l'on mesure bien $N_c$ échantillons dépassant la valeur-seuil, on considère que le pic détecté n'est pas un pic parasite. Sinon, on recommence le processus de comparaison sur n échantillons, en partant de l'échantillon suivant $E_{i+1}$ dépassant le seuil. De préférence, on fixe une limite à ces réitérations éventuelles.

Le décalage de la fenêtre de lecture du signal direct D ainsi est fixé au plus à la largeur $\tau$ de la fenêtre. Pour la détection du signal réfléchi $R_1$, on se fixe une latitude de décalage plus grande, pour tenir compte que la durée de propagation $t_2$ (Fig. 3) est plus fluctuante que la durée $t_1$ du fait de la pente du fond ou de l'état de la surface de la mer.

Le procédé de positionnement des fenêtres par comptage d'échantillons présente l'avantage en particulier de faciliter l'élimination des impulsions de bruit isolées, généralement très brèves et dont la rapidité de variation est beaucoup plus grande que celle des signaux utiles.

La validation de ceux-ci est effectuée en vérifiant que le nombre d'échantillons d'amplitude supérieure à la valeur-seuil, mesurés sur chaque pic avant la détection de son maximum, est supérieur à deux ou trois par exemple. Le pic détecté est considéré comme non significatif dans le cas contraire.

La fenêtre de lecture ayant été bien centrée sur les signaux utiles D et R après plusieurs décalages éventuels, on procède alors à l'exploitation des différents échantillons mesurés et en particulier au calcul du coefficient de réflexion du réflecteur considéré en appliquant la relation (1) aux paramètres choisis : amplitudes, ou énergies des signaux. Les valeurs du coefficient de réflexion peuvent être lissées en faisant des moyennes sur les mesures de plusieurs cycles successifs.

Dans l'exemple de réalistion du dispositif de mise en œuvre représenté à la figure 5, on voit que les signaux captés par le récepteur C en tête de la flûte 5, sont appliqués tout d'abord à un élément d'atténuation variable 7. Cet élément est constitué par exemple d'un atténuateur logarithmique programmable par pas, du type AD7111.

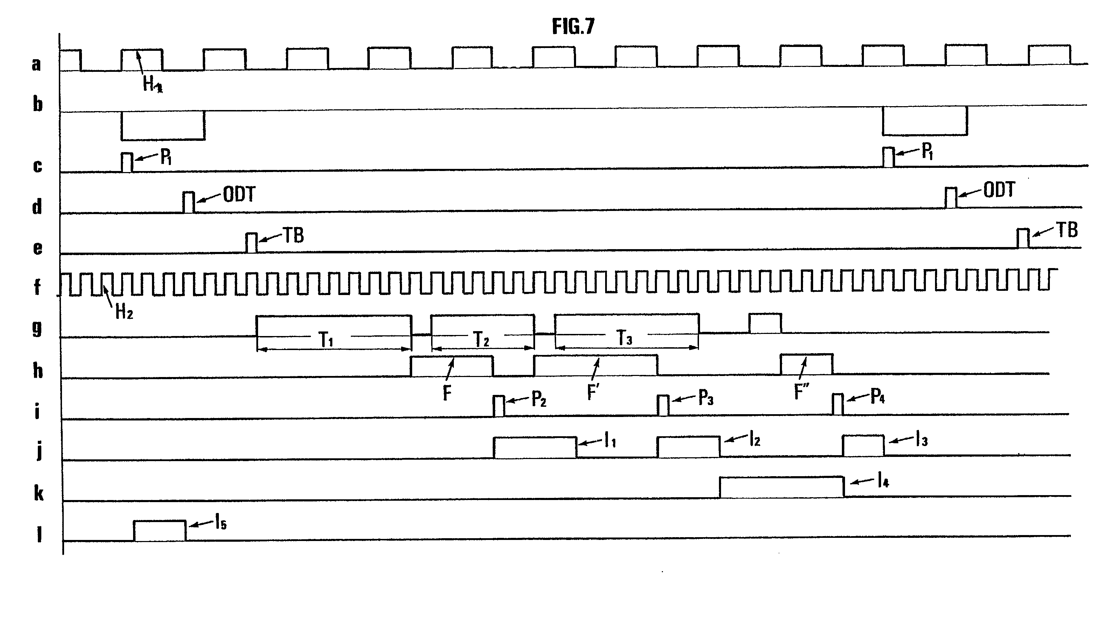

Le coefficient d'atténuation est imposé par un circuit de commande 8 qui sera décrit plus loin en relation avec la figure 6. Les signaux issus de l'atténuateur 7 sont amplifiés dans un amplificateur à gain fixe 9 dont le gain est par exemple de l'ordre de 40dB, puis appliqués à un ensemble d'acquisition 10 comportant un filtre passe-bas 11 en série avec un filtre passe-haut 12. Celui-ci est constitué par un ou plusieurs éléments de filtrage à capacité commutée (switched - capacitor filter.

Les caractéristiques de filtrage de ces éléments dépendent d'un signal d'horloge H' et de signaux de commande issus du circuit de commande 8 et précisés en relation avec la figure 5. Les signaux reçus ayant traversé l'élément de filtrage 12 sont échantillonnés et numérisés par un convertisseur analogique-numérique d'un type connu 13 sous un format flottant à 15 bits, propre à restituer une dynamique de 108dB puis transférés dans une mémoire-tampon 14.

Un processeur d'entrées-sorties IOP(15) comportant un élément du type DMA (direct memory access) gère les transferts des données par blocs depuis la mémoire-tampon 14, par l'intermédiaire de voies de transmission multiples (multi-bus) 16 vers des moyens de mémorisation disposés sur une carte centrale de traitement et d'échanges 17.

La carte centrale 17 comporte une unité centrale 18 connectée au multi-bus 16, des blocs de mémoire vive (RAM) 19, des mémoires mortes programmables (EPROM) 20, un élément 21 de gestion des interruptions du type 8259, un élément d'horloge et de comptage 22, un élément 23 de contrôle d'entrée-sortie série, un élément 24 de contrôle d'entrée-sortie parallèle et une porte à deux accès 25. Tous les éléments de la carte centrale 17 sont interconnectés par un bus interne 26.

La porte 25 connecte le multi-bus 16, soit avec les blocs de mémoire vive 19, soit avec le bus interne 26. L'élément 23 de contrôle série reçoit sur ses entrées les commandes provenant d'un clavier 27. L'élément 24 de contrôle d'entrée-sortie parallèle comporte trois portes connectés par des lignes 28 avec le bus interne 29 d'une carte d'interface 30.

Les signaux d'horloge H engendrés par l'élément d'horloge et de comptage 22 sont transmis sur le multi-bus 16 et sont utilisés pour synchroniser le fonctionnement de convertisseur analogique-numérique 13 et aussi celui des filtres passe-haut 12, comme on le verra par la suite.

La carte d'interface 30 comporte un premier élément d'interface 31 connecté au récepteur CTB (Fig. 1) qui détecte l'instant de déclenchement de la source S, un second élément d'interface 32 auquel est connecté un enregistreur 33 d'un type connu, un troisième élément d'interface 34 auquel est connecté l'écho-sondeur auxiliaire ES du bateau et un quatrième élément d'interface 35 qui est connecté au dispositif de commande 36 de la source S.

L'élément d'interface 32 transmet à l'enregistreur 33 des données analogiques provenant d'un convertisseur numérique-analogique 37 connecté au multi-bus 16 ou bien d'un commutateur 38 dont les entrées sont respectivement reliées à la sortie de l'amplificateur 9 et à la sortie du filtre passe-haut 12.

L'élément d'interface 34 est adapté à mémoriser les différentes valeurs de la profondeur d'eau mesurées au cours d'un même cycle par l'écho-sondeur et, sur commande de l'unité centrale 18 au début du cycle suivant, à les transmettre à celle-ci qui en fait la moyenne.

L'écho-sondeur, généralement celui du bateau, se trouve en avant du dispositif de réception. Pour plus de précision, on peut mémoriser les valeurs moyennes de profondeur successivement mesurées et retarder leur utilisation effective jusqu'à ce que le dispositif de réception passe au-dessus de l'endroit où ces valeurs particulières ont été obtenues.

L'élément 21 de gestion des interruptions reçoit des signaux de demandes d'interruption du processeur IOP (15), de la carte d'acquisition 17, par l'intermédiaire d'une ligne ITAC, de l'élément d'interface 34 de l'écho-sondeur par l'intermédiaire du bus 29, des lignes 28 et d'une ligne ITES provenant de l'élément de contrôle 24. Il reçoit également des signaux de demandes d'interruption par une ligne ITCY, au début de chaque cycle de mesure et d'autres provenant du clavier 27 par une ligne ITR.

Le circuit de commande 8 représenté à la figure 6, est adapté à commander d'une part l'atténuateur 7 et d'autre part les filtres passe-haut 12 de la carte d'acquisition 10 (Fig. 5).

Le degré d'atténuation nécessaire dépend des niveaux relatifs des signaux reçus dans les fenêtres centrées sur les instants $t_1$ et $t_2$ (Fig. 4). Ces niveaux relatifs sont fonction de la profondeur d'eau qui est très variable : de plusieurs dizaines à plusieurs centaines de mètres. Il dépend aussi de leurs niveaux absolus qui, eux, sont fonction en particulier de la nature et de la puissance de la source utilisée. Selon que l'on emploie un étinceleur ou une source sismique, le degré d'atténuation doit être choisi plus ou moins grand.

Pour tenir compte à la fois de la dynamique d'acquisition (108dB) et des caractéristiques du matériel d'émission utilisé, le circuit de commande est connecté et peut donc recevoir à chaque instant de la carte centrale 17, les consignes optimales.

Le circuit de commande 8 comporte un élément de décodage d'adresses 39 adapté à sélectionner sur le multi-bus 16 les commandes relatives à l'atténuation et aux paramètres de filtrage qui proviennent de la carte centrale 17, par l'intermédiaire du multi-bus 16 et à les transmettre sur un bus interne 40. A celui-ci est connecté un circuit de mémorisation 41 des paramètres de filtrage et d'atténuation. Les données concernant l'atténuateur 7 lui sont transmises depuis le circuit de mémorisation 41 par une ligne 42.

Le circuit de commande 8 comporte aussi un élément de comptage 43 qui est connecté sur le bus interne 40. Il reçoit de la carte centrale 17 (Fig. 5) un signal d'horloge H et un nombre correspondant à un coefficient diviseur, et engendre un signal d'horloge H' à une fréquence sous multiple de celle du signal d'horloge H.

Le signal d'horloge H' ainsi que les paramètres de filtrage, tels que les coefficients de surtension des filtres passe-haut 12, sont transmis à ceux-ci par des lignes 44, 45.

Le coefficient d'atténuation appliqué à l'atténuateur peut atteindre 80dB durant la fenêtre de réception de l'impulsion directe et il est égal à l'unité pour la réception du signal réfléchi. La combinaison de l'atténuateur 7 et de l'amplificateur 9 permet de s'adapter aux niveaux des signaux reçus dans toutes les conditions de fonctionnement rencontrées.

L'organisation de chaque cycle d'émission-réception est illustrée par les chronogrammes a à l de la figure 7 qui représentent respectivement :

a : un signal engendré par une horloge lente ($H_1$) ;

b : un signal de remise à zéro d'un compteur de temps actionné par l'horloge lente ;

c : une impulsion $p_1$ de début ou de réveil de cycle ;

d : une impulsion $p_2$ correspondant à un ordre de tir (ODT) ;

e : une impulsion TB indiquant l'instant de déclenchement de la source S (par le capteur CTB (Fig. 1)) ;

f : un signal engendré par une horloge rapide ($H_2$) ;

6

g : un signal délivré par un compteur d'impulsions qui est incrémenté par l'horloge rapide $H_2$. Le compteur est actionné par le signal TB d'émission (graphe e) et effectue trois comptages successifs d'impulsions d'horloge en nombres bien déterminés. Les instants successifs de fin des créneaux $T_1$, $T_2$, $T_3$ de comptage définissent les débuts des fenêtres F, F' de réception (Fig. 4). Un comptage supplémentaire d'impulsions d'horloge définit le début de la fenêtre F" de détection du bruit (id. Fig. 4) ;

h : un signal représentatif des femêtres F, F' et F" ;

i : des impulsions $p_2$, $p_3$, $p_4$ indicatives des instants successifs où s'achèvent les transferts par blocs des différents échantillons des signaux captés durant les trois fenêtres F, F' et F", réalisés par le processeur IOP (15) de l'ensemble d'acquisition 10 (Fig. 5) ;

j : un signal qui délimite trois intervalles de temps $l_1$, $l_2$, $l_3$ commençant respectivement aux instants définis par le graphe i, pendant lesquels sont effectués les calculs des amplitudes des signaux acoustiques utiles et celles du bruit de fond ;

k : un signal délimitant l'intervalle de temps $l_4$ de calcul du coefficient de réflexion CR du cycle et sa valeur "lissée" ; et

l : un signal $l_5$ délimitant un intervalle de temps de validation des résultats de l'écho-sondeur et de calcul des durées de comptage par le compteur d'impulsions (graphe g).

Les algorithmes ci-après, en relation avec les chronogrammes de la figure 7, définissent l'organisation des tâches effectuées par le système selon l'invention pendant la durée de chaque cycle.

Les symboles et abréviations utilisés sont les suivants :

- CR : désigne le coefficient de réflexion ;
- Tâche DMA : c'est l'ensemble des instructions qui permettent les transferts de données échantillonnées depuis la carte d'acquisition 10 jusqu'à la carte centrale 17 ;
- it : désigne les demandes d'interruption ;
- les lignes en pointillé correspondent à des phases d'attente à l'intérieur des tâches ;
- NET/MES : désigne une étape de tri des messages en attente qui ont été mal interprétés à cause d'erreurs dans la détection des signaux acoustiques utiles. Il peut s'agir de résultats aberrants dus à une mauvaise détection des pics ou à l'excès de bruit de fond, par exemple ; et
- réveil : désigne un message de réactivation.

TACHE DE SYNCHRONISATION
DU CYCLE
D'EMISSION/RECEPTION

REVEIL PERIODIQUE

VALIDATION DE LA SONDE
CALCUL DES TEMPS $T_1$   $T_2$

ORDRE
DE TIR → ODT

CONTROLE
TIR ← TB

LANCEMENT DU COMPTEUR

REVEIL : LORSQUE LES ECHANTILLONS DE LA FENETRE F
SONT ACQUIS A PARTIR DU TEMPS   $T_1$

DETECTION DE PIC DANS ARRIVEE DIRECTE

REVEIL : LORSQUE LES ECHOS DE LA FENETRE F'
SONT ACQUIS A PARTIR DU TEMPS   $T_2$

$T_3$

DETECTION   PIC D'ARRIVEE REFLECHIE

MISE DE L'ENREGISTREMENT
EN MODE "AFFICHE CR"

CALCUL DU CR DU TIR EN COURS

REVEIL DE LA
TACHE CYCLE

REVEIL POUR AFFICHAGE

PROCEDURE D'AFFICHAGE DU CR PONCTUEL
LANCEMENT COMPTEUR TEMPORISATION

ATTENTE DE REVEIL APRES AFFICHAGE ET APRES TEMPORISATION

CALCUL DU CR LISSE

PROCEDURE D'AFFICHAGE DU CR LISSE
LANCEMENT COMPTEUR TEMPORISATION

ATTENTE DE REVEIL APRES AFFICHAGE ET APRES TEMPORISATION

NET/MES

FIN DE CYCLE

it.$T_1$

LANCEMENT COMPTEUR $T_2$

TACHE DMA ← DEMANDE D'ACQUISITION DMA DANS FENETRE F

it.$T_2$

MISE DE L'ENREGISTREUR EN MODE "RAMPE"

LANCEMENT COMPTEUR $T_3$ (LONGEUR DE RAMPE)

TACHE DMA ← DEMANDE D'ACQUISITION DMA DANS FENETRE REFLECHIE

it TEMPORISATION

REVEIL DE LA TACHE CYCLE

TACHE DMA

ATTENTE DE REQUETE

I.O.P. ← DEMANDE DMA

REVEIL APRES TRANSFERT

ENVOI D'UN REVEIL A LA TACHE APPELANTE

AFFICHAGE CARTE CNA(13)

ATTENTE DE REQUETE

AFFICHAGE

REVEIL DE L'APPELANT

Le cycle de fonctionnement comporte :

- une phase d'initialisation ;
- une phase de commande et de contrôle du déclenchement de la source acoustique. L'ordre de tir est transmis depuis la carte centrale 17 par l'intermédiaire du circuit d'interface 35 (Fig. 5). Le "tir" étant déclenché, la tâche de synchronisation du cycle (ou tâche-cycle) se boucle sur une attente de l'arrivée du signal TB ;
- une phase d'acquisition par blocs des échantillons effectuée par le processeur IOP(15) sur commande de la tâche-cycle. Le processeur prélève le nombre demandé d'échantillons numérisés sur un rythme fixé par l'horloge rapide $H_2$. Il les stocke dans la mémoire 14 et les transmet par blocs à la carte centrale 17. L'acquisition étant terminée, le processeur envoie à la tâche-cycle un signal it d'interruption ;
- une phase de contrôle de l'écho-sondeur auxiliaire du navire. Lorsque l'écho dispose d'une nouvelle mesure, l'écho-sondeur la transmet à la suite d'un signal d'interruption. Périodiquement la tâche-cycle commande qu'une moyenne soit effectuée sur les valeurs mesurées par l'écho-sondeur, ce qui lui permet de valider les fenêtres d'acquisition et de fixer les valeurs des intervalles de temps $T_1$, $T_2$ à la fin desquels s'ouvrent les fenêtres F et F' (Fig. 7) ;
- une phase de contrôle des horloges et des compteurs. L'horloge lente $H_1$ cadence les cycles de mesure et, dans les phases d'initialisation, est utilisée pour temporiser les attentes des tâches ou attendre les réponses de l'opérateur. L'horloge rapide $H_2$ cadence les ouvertures et fermetures des différentes fenêtres (Fig. 7) et permet le décompte du temps de réponse de la carte d'acquisition. La fin des comptages déclenche une interruption dont l'effet est de réveiller des parties du programme différentes suivant la valeur d'une variable d'état qui dépend de l'avancement du cycle de mesure ; et
- une phase de visualisation des résultats où l'enregistreur 33 trace l'amplitude du signal réfléchi en fonction du temps et la valeur du coefficient de réflexion lissée sur plusieurs mesures. Les données analogiques pour l'enregistreur 33 proviennent du convertisseur numérique-analogique 37 (Fig. 5). La synchronisation du convertisseur avec la tâche-cycle se fait par émission et réception de messages relatifs à des échanges de données, à des emplacements de mémoire particuliers ("boites à lettres") connus des tâches intervenant dans les échanges.

Chaque tâche initialisée commence par se mettre en attente d'un réveil. Il en est ainsi, en particulier pour la tâche-cycle qui est réveillée périodiquement dès que l'opérateur est passé à la phase active du cycle de mesure.

Quelle que soit la phase de fonctionnement, les interruptions it provenant du clavier sont prises en compte. L'opérateur peut ainsi dialoguer de façon interactive avec le système dans le but de modifier les paramètres, contrôler les périphériques, afficher les résultats, introduire des points de repère sur les enregistrements, visualiser les résultats intermédiaires et en particulier le niveau de bruit à l'entrée de la chaîne d'acquisition.

D'autres variantes sont également possibles dans le cadre du système selon l'invention.

Ainsi, la carte d'acquisition 10 à voie de réception unique (Fig. 5) peut être remplacée par une carte à voies de réception multiples, chacune d'elles étant adaptée à recevoir une bande particulière du spectre de fréquence des signaux reçus. On peut ainsi obtenir une représentation en fonction de la fréquence de la valeur du coefficient de réflexion.

Dans ce cas, le filtre passe-haut 12 sera remplacé par plusieurs filtres passe-bande complémentaires disposés en parallèle et réalisés également par des dispositifs de filtrage à capacité commutée dont les paramètres sont imposés à volonté par la carte centrale de commande 17, par l'intermédiaire du circuit 8.

L'ensemble de réception (Fig. 1) peut être spécialement adapté à la détection des signaux pour la mesure de coefficients de réflexion. Il peut être constitué également d'une flûte sismique modifiée pour le recevoir. Dans ce cas, le récepteur C et le profondimètre 7 sont disposés dans la section de tête d'une telle flûte.

## Revendications

1. - Système de mesure du coefficient de réflexion des ondes acoustiques de réflecteurs immergés émises par une source (S) d'impulsions acoustiques remorquée en immersion par un bateau et reçues par un dispositif de réception comportant un récepteur (CTB) proche de la source, pour déterminer les instants de déclenchement successifs de celle-ci et des moyens de réception (C) remorqués également par le bateau avec un certain déport longitudinal par rapport à la source, le bateau comportant un écho-sondeur, et la source étant associée à un ensemble de commande (36), caractérisé en ce qu'il comporte un calculateur numérique programmé (17), des moyens d'enregistrement (33), une carte d'interface (30) comportant des circuits d'interface (31, 32, 34, 35) pour assurer les communications entre le calculateur et le récepteur proche (CTB), et entre les moyens d'enregistrement (33) et l'ensemble de commande (36) de la source (S) et en ce qu'il comporte des moyens d'amplification (9) des moyens d'atténuation variable (7) des signaux reçus par les moyens de réception, un ensemble d'acquisition (10) piloté par le calculateur et comportant des moyens de filtrage à caractéristiques ajustables (12) et un convertisseur analogique-numérique (13), des moyens (8) pilotés par le calculateur (17) pour commander les moyens d'atténuation et les moyens de filtrage et des moyens pour établir un dialogue interactif entre un opérateur et le calculateur.

2. - Système de mesure selon la revendication 1, caractérisé en ce que l'ensemble d'acquisition comporte des moyens de mémorisation (14) des échantillons de signaux numérisés produits par le convertisseur analogique-numérique (13) et une unité de traitement (15) communiquant avec le calculateur et adaptée à lui transmettre par blocs les données numérisées contenues dans les moyens de mémorisation.

3. - Système de mesure selon la revendication 1, caractérisé en ce qu'il comporte des voies de transmission (multi-bus 16) faisant communiquer le calculateur avec l'ensemble d'acquisition (10) et un convertisseur numérique-analogique (37) dont les entrées sont connectées auxdites voies de transmission (16) et dont la sortie est connectée au circuit d'interface (32) des moyens d'enregistrement (33).

4. - Système de mesure selon la revendication 1, caractérisé en ce que les moyens d'atténuation (7) comportent un atténuateur logarithmique par pas, et les moyens de filtrage (12) à caractéristiques ajustables comportent des éléments de filtrage à capacité commutée.

5. - Système de mesure selon la revendication 4, caractérisé en ce que les moyens de commande (8) comportent un élément décodeur d'adresses (39) connecté aux voies de transmission (16), un élément de comptage (43) adapté à engendrer un signal d'horloge (H') pour les éléments de filtrage (12) et un élément de mémorisation (41) pour des paramètres de filtrage et d'atténuation, ledit élément de mémorisation étant connecté aux éléments de filtrage et à l'atténuateur logarithmique (7).

6. - Système de mesure selon la revendication 2, caractérisé en ce qu'il comporte des moyens de comptage pour délimiter trois intervalles de temps (F, F', F") de réception et des moyens pour positionner lesdites intervalles de temps en fonction de l'amplitude des échantillons de signaux délivrés par le convertisseur analogique-numérique (13), ces signaux étant captés durant ces intervalles de temps.

7. - Système de mesure selon la revendication 2, caractérisé en ce qu'il comporte des moyens de comptage pour délimiter deux intervalles de temps (F, F') de réception des signaux acoustiques et un troisième intervalle de temps (F") de réception du bruit de fond, des moyens pour comparer les amplitudes des échantillons de signaux captés durant les deux premiers intervalles de temps, de manière à déterminer une amplitude-seuil et des moyens pour positionner lesdits deux intervalles de temps pour que le nombre d'échantillons de signaux acoustiques captés durant cesdits intervalles et dont l'amplitude est plus grande que l'amplitude-seuil, soit supérieur à un nombre prédéterminé.

## Claims

1. System for measuring the coefficient of reflection of sound waves from submerged reflectors, these sound waves being transmitted by a source (S) of sound pulses when immersed and towed by a vessel and received by a receiving device comprising a receiver (CTB) close to the source, for the purpose of determining the successive tripping times for the said source and including a receiving device (C) also towed by the vessel, with a certain longitudinal offset relative to the source, the vessel carrying an echo sounder and the source being associated with a control unit (36), characterised in that it includes a programmed digital computer (17), a recording device (33), an interface card (30) comprising interface circuits (31, 32, 34, 35) to provide communications between the computer and the adjacent receiver (CTB) and between the recording device (33) and the control unit (36) for the source (S) and in that it includes a means of amplification (9) for the variable attenuation device (7) for the signals received by the receiving device, a data acquisition unit (10) controlled by the computer and comprising a filtering unit with adjustable characteristics (12) together with an analog to digital converter (13), a device (8) controlled by the computer (17) controlling the attenuation device and the filtering unit and a means of establishing an interactive dialogue between an operator and the computer.

2. System of measurement in accordance with claim 1, characterised in that the data acquisition unit comprises a memory storage device (14) for samples of digitalised signals produced by the analog to digital converter (13) and a processing unit (15) communicating with the computer and adapted so that the digitalised data contained in the memory storage device may be transmitted to it in the form of blocks.

3. System of measurement in accordance with claim 1, characterised in that it includes transmission channels (multi-bus 16) enabling the computer to communicate with the data acquisition unit (10) and an analog to digital converter (37), the inputs being connected to the said transmission channels (16) and the output being connected to the interface circuit (32) for the recording device (33).

4. System of measurement in accordance with claim 1, characterised in that the attenuation device (7) comprises a stepping type logarithmic attenuator and the filtering unit (12) is adjustable and includes filtering elements with switched line capacity.

5. System of measurement in accordance with claim 4, characterised in that the control device (8) comprises an address decoder (39) connected to the transmission channels (16), a counting device (43) adapted to generate a clock signal (H') for the filtering unit (12) and a memory storage device (41) for the filtering and attenuation parameters, the said memory storage device being connected to the filtering unit and the logarithmic attenuator (7).

6. System of measurement in accordance with claim 2, characterised in that it includes a counting device for defining three intervals of time (F, F', F") for the reception system and a means to position the said intervals of time in terms the amplitude of the samples of signals provided by the analog to digital converter (13), these signals being collected during the said intervals of time.

7. System of measurement in accordance with claim 2, characterised in that it includes a counting device to define two intervals of time (F, F') for the reception of sound signals and a third interval of time (F'') for the reception of background noise, a device for comparing the amplitudes of the said signal samples collected during the first two intervals of time, in order to define the amplitude-threshold value and a means to position the said two intervals of time in order that the number of samples of sound signals collected during the said intervals, where the amplitude is greater than the amplitude-threshold value, exceed a predetermined number.

**Patentansprüche**

1. Anordnung zum Messen des Reflexionskoeffizienten der Schallwellen von getauchten Reflektoren, die von einer Quelle (S) für akustische Impulse ausgesandt wurden, wobei die Quelle im Tauchzustand durch ein Schiff geschleppt wird und die von einer Empfangsvorrichtung mit einem nahe der Quelle befindlichen Empfänger (CTB) empfangen wurden, um die aufeinanderfolgenden Auslöseaugenblicke hiervon zu bestimmen; sowie Empfängermittel (C), die ebenfalls vom Schiff mit einer gewissen Längsversetzung, bezogen auf die Quelle, geschleppt werden, wobei das Schiff eine Echosondiereinrichtung umfaßt und die Quelle einer Steueranordnung (36) zugeordnet ist, dadurch gekennzeichnet, daß sie einen programmierten Digitalrechner (17), Aufzeichnungseinrichtungen (33) und eine Interfacekarte (30) mit Interfaceschaltungen (31, 32, 34, 35) aufweisen, um die Verbindungen zwischen Rechner und nahem Empfänger (CTB) und zwischen den Aufzeichnungsmitteln (33) und der Steueranordnung (36) für die Quelle (S) sicherzustellen; und daß sie Verstärkermittel (9), Mittel zur variablen Dämpfung (7) der durch die Empfängermittel empfangenen Signale und einer rechnergesteuerten Erfassungsanordnung (10) aufweist und mit Filtriermitteln mit einstellbaren Charakteristiken (12) sowie einem Analogdigitalwandler (13), rechnergesteuerten (17) Mitteln (8) zur Steuerung der Dämpfungsmittel und der Filtriermittel; sowie Einrichtungen zur Herstellung eines wechselseitigen Dialogs zwischen einem Operator und dem Rechner.

2. Meßanordnung nach Anspruch 1, dadurch gekennzeichnet, daß die Erfassungsanordnung Mittel zum Speichern (14) der digitalisierten vom Analogdigitalwandler (13) erzeugten Signalabtastproben sowie eine Verarbeitungseinheit (15) aufweist, die mit dem Rechner in Verbindung steht und so ausgebildet ist, daß sie ihm blockweise die in den Speichermitteln enthaltenen digitalisierten Daten überträgt.

3. Meßanordnung nach Anspruch 1, dadurch gekennzeichnet, daß sie Übertragungswege (multi-bus 16) umfaßt, die den Rechner mit der Erfassungsanordnung (10) und einem Digitalanalogwandler (37) in Verbindung setzen, dessen Eingänge mit diesen Übertragungswegen (16) verbunden sind und deren Ausgang mit der Interfaceschaltung (32) der Aufzeichnungsmittel (33) verbunden ist.

4. Meßanordnung nach Anspruch 1, dadurch gekennzeichnet, daß die Dämpfungsmittel (7) ein logarithmisches Dämpfungsschrittglied umfassen und die Filtriermittel (12) mit einstellbaren Charakteristiken Filtrierelemente mit Schaltkapazität aufweisen.

5. Meßanrodnung nach Anspruch 4, dadurch gekennzeichnet, daß die Steuermittel (8) ein Adressendecodierelement (39) umfassen, das mit den Übertragungswegen (16) verbunden ist, ein Zählelement (43), das so ausgebildet ist, daß es ein Taktgebersignal (H') für die Filtrierelemente (12) erzeugt und ein Speicherelement (41) für Filter- und Dämpfungsparameter, wobei das Speicherelement mit den Filtrierelementen und dem logarithmischen Dämpfungsglied (7) verbunden ist.

6. Meßanordnung nach Anspruch 2, dadurch gekennzeichnet, daß sie Zählmittel zur Begrenzung von drei Zeitintervallen (F, F', F'') für Empfang und Mittel zum Legen dieser Zeitintervalle als Funktion der Amplitude der Signalabtastproben, die durch den Analogdigitalwandler (13) geliefert wurden, wobei diese Signale während dieser Zeitintervalle aufgenommen werden, aufweist.

7. Meßanordnung nach Anspruch 2, dadurch gekennzeichnet, daß sie Zählmittel umfaßt, um zwei Zeitintervalle (F, F') zum Empfang der akustischen und ein drittes Zeitintervall (F'') zum Empfang des Bodengeräusches zu begrenzen, Einrichtungen zum Vergleichen der Amplituden der Signalabtastproben, die während der beiden ersten Zeitintervalle aufgenommen sind, derart, daß ein Amplitudenschwellenwert bestimmt wird und Mittel, um diese beiden Zeitintervalle so zu legen, daß die Anzahl der aufgenommenen Schallsignalabtastproben während dieser Zeitintervalle und damit die Amplitude größer ist als die Schwellenwertamplitude, d.h. größer als eine vorbestimmte Zahl.

**FIG.1**

**FIG.2**

**FIG.3**

**FIG.4**

**FIG.6**

FIG.5

**FIG.7**

EP 0 215 703 B1